# EUROPÄISCHE PATENTSCHRIFT

(11) **EP 2 119 946 B1**
(45) Veröffentlichungstag und Bekanntmachung des Hinweises auf die Patenterteilung: **26.10.2011**
(21) Anmeldenummer: 09158170.2
(22) Anmeldetag: 17.04.2009
(51) Int. Cl.: F16K 1/22

(54) **Ventilbaueinheit mit zwei Drehklappenventilen**
Valve component with two rotating flap valves
Ensemble soupape doté de deux vannes à clapet rotatives

(30) Priorität: 07.05.2008 DE 102008022435
(43) Veröffentlichungstag der Anmeldung: 18.11.2009
(73) Patentinhaber: Karl Dungs GmbH & Co.KG, 73660 Urbach (DE)
(72) Erfinder: Petermann, Harald, 73669 Lichtenwald (DE)
(74) Vertreter: Rüger, Barthelt & Abel Patentanwälte

(56) Entgegenhaltungen:
- GB-A- 2 064 730
- US-A- 4 846 212
- US-A- 4 846 225

## Beschreibung

Die Erfindung betrifft eine Ventilbaueinheit zum Absperren, Freigeben und Regulieren eines Fluidstroms insbesondere für sicherheitsrelevante Anwendungen bei brennbaren Gasen.

Zum Absperren, Freigeben und Regulieren von Gasströmen sind Sitzventile in Gebrauch. Bei sicherheitsrelevanten Anwendungsfällen werden gerne Ventilanordnungen benutzt, die zwei im Strömungsweg hintereinander angeordnete Ventile umfassen. Diese Ventilanordnungen haben zwei Ventilverschlussglieder und zwei Ventilsitze. Die Ventilverschlussglieder sitzen im Schließzustand auf ihren Ventilsitzen und versperren den Gasdurchgang. Der Gasdruck lastet dabei auf dem Ventilverschlussglied und fördert die Schließwirkung desselben. Unter Einhaltung bestimmter Rahmenbedingungen hinsichtlich der Schließzeit und der Schließkraft taugt dieses Grundkonzept für sicherheitsrelevante Anwendungen.

Es ist auch bekannt, zum Regulieren von Fluidströmen Drehklappenventile einzusetzen, siehe beispielsweise US-A-4846 212. Diese haben einen geraden Durchgang und als Stellglied zur Beeinflussung des Fluidstroms eine Drehklappe. Diese weist meist einen Kreisquerschnitt auf und ist um eine quer zum Fluidstrom orientierte Achse drehbar gelagert. Es kann eine Dichtung vorgesehen sein, die mit dem Rand der Drehklappe zusammenwirkt, um in Querstellung der Drehklappe mit dieser einen dichtenden Abschluss zu bilden.

Es ist Aufgabe eine Ventilbaueinheit anzugeben, die hohen Sicherheitsanforderungen bei geringem Bauraum und großer Stellgeschwindigkeit genügt.

Diese Aufgabe wird mit der Ventilbaueinheit nach Anspruch 1 gelöst.

Die erfindungsgemäße Ventilbaueinheit fasst in den Bauraum, der sonst für ein genormtes Sitzventil vorgesehen ist, zwei Drehklappenventile zusammen, die an den beiden Enden eines Verbindungsstücks angeordnet ist. Die Länge des Verbindungsstücks ist vorzugsweise relativ kurz. Sie beträgt höchstens das Dreifache der Länge eines Gehäuses eines der Drehklappenventile. Das Verbindungsstück ist jedoch mindestens so lang wie das Gehäuse des Drehklappenventils. Durch diese Maßnahme wird einerseits sichergestellt, dass die beiden Drehklappen der Drehklappenventile unabhängig voneinander gedreht werden können, ohne aneinander anzustoßen. Damit können Sicherheitsmerkmale erfüllt werden. Beispielsweise kann eine der Klappen ungehindert schließen, wenn die andere beispielsweise in Folge eines Fehlerfalls in Offenstellung blockiert ist.

Durch die Begrenzung des Verbindungsstücks auf das maximal Dreifache der Gehäuselänge wird erreicht, dass der Abstand des Eingangs und des Ausgangs bei der Ventilbaueinheit, d.h. deren axiale Länge mit der Länge eines genormten Standardsitzventil in Übereinstimmung gebracht werden kann. Die Axialabmessungen der Ventilbaueinheit können normgerecht festgelegt werden. Dies eröffnet die Möglichkeit des Austausches herkömmlicher einfacher Sitzventile durch die erfindungsgemäße Ventilbaueinheit mit zwei Drehklappenventilen.

Bei dem erfindungsgemäßen Konzept sind die beiden Drehklappenventile und das Verbindungsstück koaxial zueinander angeordnet. Es ergibt sich ein gerader Gasweg. Sind beide Drehklappen in Offenstellung tritt an der Ventilbaueinheit ein äußerst geringer Druckverlust auf. Die Ventilbaueinheit eignet sich deshalb insbesondere für den Einbau in Leitungssystemen mit besonders niedrigem Druck und/oder besonders hoher Strömungsgeschwindigkeit des Gases.

Vorzugsweise weisen die beiden Drehklappenventile und das Verbindungsstück jeweils einen Durchgang mit gleicher Querschnittsform auf. Vorzugsweise stimmen die Durchgänge auch hinsichtlich ihrer Querschnittsfläche miteinander überein. Auch dadurch wird ein minimierter Druckverlust durch Vermeidung von Beschleunigungs- und Bremsvorgängen der durchströmenden Gasströmung erreicht.

Die Gehäuse der beiden Drehklappenventile und das Verbindungsstück sind vorzugsweise miteinander lösbar verbunden. Dies erleichtert die Wartung und schafft Zugang zu dem Innenraum des Verbindungsstücks, in dem weitere Elemente angeordnet werden können. Solche Elemente sind beispielsweise Filter, Geschwindigkeitsmesseinrichtungen, Druckmesseinrichtungen, Temperaturmesseinrichtungen, Laminatoren und dergleichen mehr. Solche Einbauten sind in der Ventilbaueinheit gut geschützt. Bei Versand der Ventilbaueinheit vom Hersteller zum Anwender schützen die geschlossenen Drehklappen auch empfindliche Einbauten zuverlässig. Es ist sogar möglich, den Innenraum des Verbindungsstücks mit einem schützenden Gas, beispielsweise Stickstoff oder Kohlendioxid zu füllen, um empfindliche Sensoren, Filter oder dergleichen vor Alterung oder sonstiger Verschlechterung zu schützen.

Die beiden Drehklappen sind nicht zwingend - aber vorzugsweise um zueinander parallele Drehachsen drehbar gelagert. Entsprechende drehfest mit den Drehklappen verbundene Wellen können jeweils mit einer Antriebseinrichtung verbunden und von dieser gezielt betätigt sein. Es ist möglich, die Antriebseinrichtungen so auszubilden und zu steuern, dass ein Antrieb unabhängig von dem anderen Antrieb ist.

Es ist möglich, eines oder beide Drehklappenventile als Auf-Zu-Ventile auszubilden. Es kann z.B. nur einer der Antriebe ein zwischen zwei Endstellungen hin und her schaltender Auf-Zu-Stellantrieb sein. Es können auch beide Antriebe als zwischen zwei Endstellungen hin und her schaltender Auf-Zu-Stellantrieb ausgebildet sein.

Es kann mindestens einer der Antriebe (oder auch beide) als pneumatischer Antrieb ausgebildet sein. Es kann auch mindestens einer der Antriebe (oder auch beide) mindestens einen Motorstellantrieb aufweisen. Zwischen dem Motorstellantrieb (oder einem sonstigen Antrieb) und der Drehklappe kann im Kraftübertragungsweg eine bei Ausfall des Betriebsmediums selbstlösende Kupplung angeordnet sein. Dies ist insbesondere vorteilhaft, wenn der Antrieb bei Betriebsmittelausfall schwergängig ist oder wird.

Eines oder beide der Drehklappenventile können als Regulierventile ausgebildet sein. Vorzugsweise ist eines der Drehklappenventile ein Regulierventil während das andere ein Auf-Zu-Ventil ist. Vorzugsweise ist das stromaufwärtige Drehklappenventil als Regulierventil ausgebildet. Vorzugsweise ist das stromabwärtige Drehklappenventil als Auf-Zu-Ventil ausgebildet. Dazu ist einer der Antriebe als Proportionalstellantrieb ausgebildet. Es können auch beide Antriebe als Proportionalstellantrieb ausgebildet sein. Der oder die Proportionalstellantriebe können als positionsgeregelte Antriebe ausgebildet sein.

In dem Verbindungsstück kann unabhängig von der jeweiligen Funktion und Aufgabe der Drehklappenventile ein Filter angeordnet sein. Wenn aber das stromaufwärtige Drehklappenventil als Regulierventil ausgebildet ist, wird das Auf-Zu-Ventil von einem gefilterten Gasstrom durchströmt. Ablagerungen an dichtenden Flächen, die zu Leckagen führen könnten, werden somit insbesondere von dem Auf-Zu-Ventil ferngehalten, dem besondere Sicherheitsfunktion zukommt.

Die Stellantriebe der beiden Drehklappenventile sind vorzugsweise voneinander unabhängig betätigbar. Sie können untereinander gleich oder unterschiedlich ausgebildet sein. Sie können beispielsweise als Elektroantriebe, Pneumatikantriebe, Hydraulikantriebe oder dergleichen ausgebildet sein. Z.B. kann die Antriebseinrichtung mindestens einen Linearantrieb) aufweisen, der über ein Umlenkgetriebe mit der Drehklappe des Drehklappenventils verbunden ist.

Beispielsweise werden die Stellantriebe durch Pneumatikzylinder gebildet, deren Kolbenstange an einem Kurbelarm angreift, der mit der Drehklappe verbunden ist. Alternative Getriebe zum Umsetzen der Bewegung des Antriebs in die Drehbewegung der Drehklappe sind ebenfalls möglich, wie beispielsweise Zahnstangengetriebe, Erfindungsgemäß ist mindestens einem, besser aber beiden Drehklappenventilen eine Selbstschlusseinrichtung zugeordnet. Diese kann z.B. in einer Feder bestehen, die die Drehklappe auf ihre Schließstellung hin vorspannt. Es kann sich dabei um eine Spiralfeder, eine Schraubenfeder oder ein sonstiges geeignetes Federmittel handeln, das die zum Schließen der Drehklappe erforderliche Schließenergie speichert und bedarfsweise freigibt.

Die Betätigungsrichtungen der beiden Drehklappen stimmen miteinander vorzugsweise überein. Z.B. werden beide Drehklappen durch eine Rechtsdrehung geöffnet. Die Betätigungsrichtungen der beiden Drehklappen können aber auch unterschiedlich festgelegt sein.

Sollen die Antriebe lediglich eine Auf-Zu-Stellbewegung der jeweiligen Drehklappen bewirken, können als Stellantriebe solche angewendet werden, die keine Positionsregelung aufweisen, sondern die Drehklappe lediglich zwischen zwei vorgegebenen Endstellungen um etwa 90° drehen. Es können bedarfsweise auch positionsgeregelte Antriebe vorgesehen werden, über die Zwischenstellungen der Drehklappen eingestellt werden können. Solche Zwischenstellungen ermöglichen die Regulierung eines Gasstroms beispielsweise zu Regelzwecken. Dabei ist es vorteilhaft, wenn zwischen den beiden Drehklappen ein Linearisierungselement angeordnet ist, das über seinen Querschnitt verteilt Zonen mit unterschiedlichem Strömungswiderstand aufweist. Diese Linearisierungselement wird vorzugsweise in unmittelbarer Nachbarschaft zu der zur Regulierung dienen Drehklappe angeordnet. Das Linearisierungselement kann z.B. so ausgebildet sein, dass es an verschiedenen Stellen seiner Durchtrittsfläche unterschiedliche Strömungswiderstände aufweist, um unterschiedliche Strömungswiderstände der Durchtrittsfläche des vorgelagerten Drehklappenventils zu kompensieren.

Für die Rückstelleigenschaften bzw. Selbstschlusseigenschaften wenigstens eines der Drehklappenventile kann es vorteilhaft sein, wenn die Stellkraft des Stellantriebs über eine Kupplungseinrichtung auf die Drehklappe übertragen wird. Eine solche Kupplungseinrichtung ist vorzugsweise selbstlösend. Sie kann durch das Arbeitsmedium des Antriebs (elektrische Spannung, Druckluft oder dergleichen) in geschlossenem Zustand gehalten werden. Fällt die Druckluftversorgung oder die Spannungsversorgung eines entsprechenden Antriebs aus, löst die Kupplung und trennt somit den Antrieb von der Drehklappe. Diese kann dann durch die ihr zugeordnete Feder oder ein anderes geeignetes Mittel zügig in Schließposition überführt werden.

Weitere Einzelheiten vorteilhafter Ausführungsformen der Erfindung sind Gegenstand der Zeichnung oder der Beschreibung. Die Beschreibung beschränkt sich auf wesentliche Aspekte der Erfindung und sonstige Gegebenheiten. Die Zeichnung offenbart weitere Details und ist ergänzend heranzuziehen.

Es zeigen:
Figur 1 eine Ventilbaueinheit in vereinfachter Seitenansicht,
Figur 2 die Ventilbaueinheit nach Figur 1 in vereinfachter längs geschnittener Darstellung,
Figur 2a ein Linearisierungselement zur Linearisierung der Durchlasskennlinie der stromaufwärtigen Drehklappe.
Figur 3 eine Antriebseinrichtung eines Drehklappenventils in schematisierter Draufsicht,
Figur 4 eine abgewandelte Ausführungsform einer Antriebseinrichtung eines Drehklappenventils in schematisierter Draufsicht,
Figur 5 die Ventilbaueinheit nach Figur 1 mit Drucküberwachungseinrichtung in schematisierter Blockdarstellung und
Figur 6 eine alternative Ausführungsform einer Ventilbaueinheit mit Drucküberwachungseinrichtung in schematisierter Blockdarstellung.

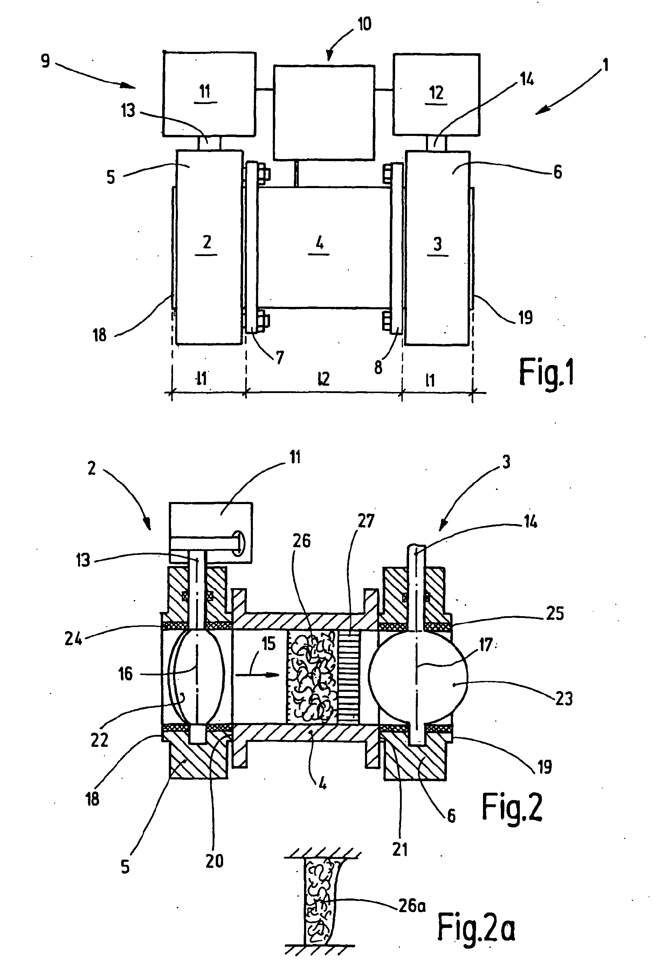

In Figur 1 ist die erfindungsgemäße Ventilbaueinheit 1 veranschaulicht. Zu ihr gehören zwei Drehklappenventile 2, 3, die über ein Verbindungsstück 4 miteinander verbunden sind. Die Drehklappenventile 2, 3 weisen ringförmige Gehäuse 5, 6 auf, die konzentrisch zu dem rohrförmigen Verbindungsstück 4 an beiden Enden desselben angeordnet sind. Das Verbindungsstück 4 ist an seinen Enden mit Scheibenflanschen 7, 8 verbunden. Dazu sind in den ringförmigen Gehäusen 5, 6 z.B. Gewindebohrungen ausgebildet, in denen entsprechende Verbindungsschrauben oder -bolzen sitzen, die die Flansche 7, 8 durchsetzen und gegen die ringförmigen Gehäuse 2, 3 pressen. Den Drehklappenventilen 2, 3 ist, wie Figur 1 schematisch andeutet, eine Antriebseinrichtung 9 zugeordnet. Zu dieser gehört eine Steuereinrichtung 10, die mit Antrieben 11, 12 für die Drehklappenventile 2, 3 verbunden ist. Die Antriebe 11, 12 wirken auf Wellen 13, 14, die die Gehäuse 2, 3, wie Figur 2 zeigt, radial durchsetzen und somit quer zu der Durchgangsrichtung 15 orientierte Drehachsen 16, 17 festlegen. Die Wellen 13, 14 sind in entsprechenden Durchgangsbohrungen der Gehäuse 2, 3 abgedichtet drehbar gelagert.

Die ringförmigen Gehäuse 5, 6 weisen jeweils eine axiale Länge L1 auf, die in Durchgangsrichtung 15 zu messen ist. Die Durchgangsrichtung 15 stimmt mit der Längsrichtung des Verbindungsstücks 4 überein. Die Länge L1 bemisst sich dabei als Abstand von einer Stirnseite 18, 19 eines jeweiligen Gehäuses 5, 6 zu seiner gegenüber liegenden Stirnseite 20, 21. Die Länge L2 des Verbindungsstücks 4 bemisst sich als Abstand seiner einander entgegengesetzt liegenden, jeweils an den Stirnseiten 20, 21 anliegenden Flanschflächen.

Wie insbesondere aus Figur 2 ersichtlich, stimmen die äußeren Berandungen der Strömungsquerschnitte der beiden Drehklappenventile 2, 3 untereinander überein. Sie stimmen außerdem mit der Berandung des freien Strömungsquerschnitts des Verbindungsstücks 4 überein. Somit sind die Strömungsquerschnitte der Drehklappenventile 2, 3 und des Verbindungsstücks 4 im Wesentlichen gleich.

Die Wellen 13, 14 tragen jeweils eine Drehklappe 22, 23, deren äußere Berandung, wie Figur 2 rechts zeigt, mit dem inneren Querschnitt der Gehäuse 5, 6 übereinstimmt. Die Drehklappen 22, 23 sind drehfest mit den Wellen 13, 14 verbunden. Die Drehachsen 16, 17 verlaufen mittig durch die Drehklappen 22,2 3. Die Gehäuse 5, 6 sind innen mit einer aus einem geeigneten Elastomer oder einem anderen Dichtungsmaterial bestehenden Auskleidung 24, 25 versehen, die wenn die betreffende Drehklappe 22 oder 23 quer zu der Durchgangsrichtung 5 gedreht ist, an dem gesamten Außenumfang der jeweiligen Drehklappe 22, 23 dichtend abschließt. Die Auskleidung 24, 25 erstreckt sich entlang des gesamten Umfangs jedes Durchgangs. Sie kann eine gewisse Rastwirkung für die Drehklappen 22, 23 in Schließstellung haben.

In Offenstellung stehen die Drehklappen 22, 23 vorzugsweise längs zu der Durchgangsrichtung 15, wobei sie aus den Gehäusen 5, 6, wie Figur 2 rechts zeigt, heraus ragen können. Das Verbindungsstück 4 hat eine solche Länge, dass verhindert wird, dass sich die Drehklappen 22, 23 gegenseitig berühren können. Dies wird erreicht, indem die Länge L2 mindestens so groß ist wie die Länge L1. Vorzugsweise aber ist die Länge L2 nicht größer als das Dreifache der Länge L1, wodurch eine kompakte Baueinheit erhalten wird, die herkömmliche Standardventile ersetzen kann. Vorzugsweise sind die Drehklappenventile 2, 3 untereinander identisch aufgebaut und haben übereinstimmende Öffnungsrichtungen und übereinstimmende Schließrichtungen - z.B. rechts drehen zum Öffnen und links drehen zum Schließen. Es ist aber auch möglich, beide Drehklappenventile mit zueinander gegensinnigen Öffnungs- und Schließrichtungen auszubilden.

Das Verbindungsstück 4 umschließt einen Innenraum, in dem Einbauten vorgesehen sein können, wie beispielsweise ein Filter 26 und/oder eine Strömungsleiteinrichtung 27. Das Filter 26 kann beispielsweise dazu dienen, Feststoffpartikel von dem Drehklappenventil 3 und nachgeordneten Einrichtungen fernzuhalten. Aufgrund des relativ großen zur Verfügung stehenden Raums kann der Strömungswiderstand des Filters 26 sehr gering gemacht werden. Zusätzlich zu dem oder an Stelle des Filters 26 kann die Strömungsleiteinrichtung 27 bewirken, dass von dem Drehklappenventil 2 und/oder dem Filter 26 herrührende Verwirbelungen gemildert oder beseitigt werden. Dies ist insbesondere sinnvoll, wenn das Drehklappenventil 2 ein Regulierventil ist, das nicht nur eine Offenstellung und eine Schließstellung sondern auch Zwischenstellungen einnehmen kann, in denen es in einem spitzen Winkel zu der Durchgangsrichtung 15 orientiert ist.

In das Verbindungsstück 4 kann auch ein Linearisierungselement 26a eingebaut werden, das aus Fig. 2a ersichtlich ist. Dieses Linearisierungselement 26a kann bezogen auf seine Querschnittsfläche mit einem ortsabhängigen Strömungswiderstand ausgebildet sein. Z.B. kann er an den Rändern, die den zuerst öffnenden sichelförmigen Schlitzen der Drehklappe benachbart sind, größer sein als in einem mittleren Bereich. Das Linearisierungselement dient dazu, die stark nichtlineare Abhängigkeit des Massenstroms von dem Drehwinkel der Drehklappe 22 zu linearisieren. Damit kann das eingangsseitige Drehklappenventil 2 besser als Regelventil genutzt werden.

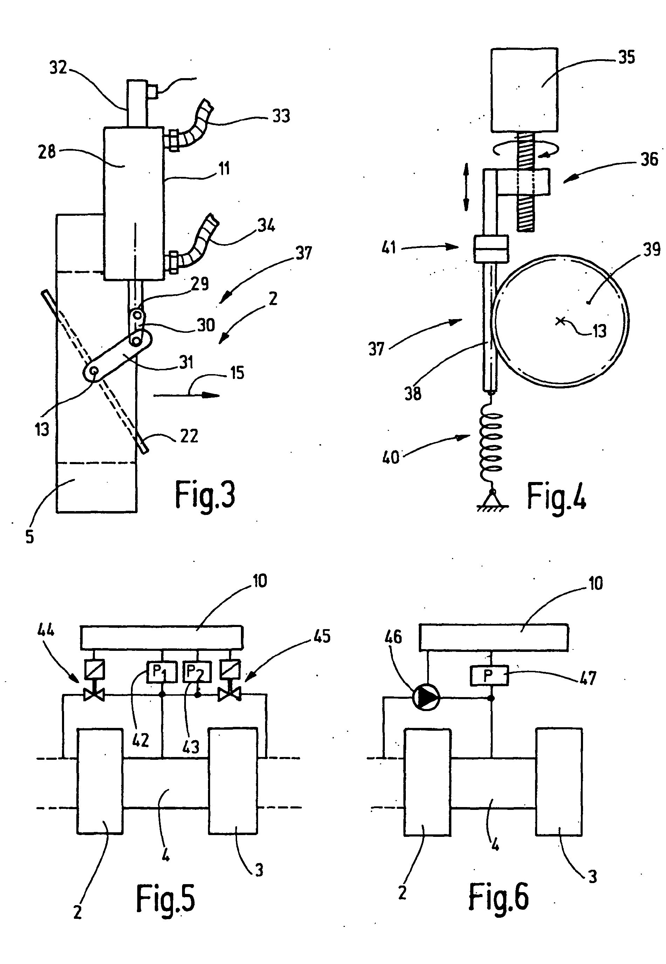

Die Antriebseinrichtung 9 kann gleiche oder unterschiedliche Antriebe 11, 12 umfassen. Im bevorzugten Ausführungsbeispiel ist der Antrieb 11 ein Pneumatikantrieb, wie es Figur 3 veranschaulicht. Dieser wird durch einen Pneumatikzylinder 28 mit einem darin abgedichtet verschiebbar gelagerten Kolben gebildet. Der Kolben ist mit einer Kolbenstange 29 verbunden, die abgedichtet aus dem Pneumatikzylinder 28 heraus geführt ist. Die Kolbenstange 29 greift gegebenenfalls über ein Pleuel 30 an einem Kurbelarm 31 an, der drehfest mit der Welle 13 verbunden ist. Eine Verschiebung des Kolbens in dem Pneumatikzylinder 28 bewirkt somit eine Verdrehung der Drehklappe 22. Vorzugsweise steht die Kolbenstange 29 etwa rechtwinklig zu dem Kurbelarm 31, wenn die Drehklappe 22 quer zu der Durchgangsrichtung 15 steht. Damit wird erreicht, dass sich die erhöhten Rastkräfte, die bei der Schließstellung der Drehklappe 22 in Folge der Wirkung der abdichtenden Auskleidung 24 auftreten können, sicher überwunden werden.

An dem Pneumatikzylinder 28 oder an anderer geeigneter Stelle kann eine Positionserfassungseinrichtung 32 vorgesehen sein, die die Position des Kolbens, der Kolbenstange 29 oder der Drehklappe 22 erfasst. Sowohl die Positionserfassungseinrichtung 32 wie auch Pneumatikleitungen 33, 34 sind, wie Figur 1 schematisch andeutet, mit der Steuereinrichtung 10 verbunden. Diese kontrolliert somit die Position der Drehklappe 22.

Der Antrieb 12 kann identisch ausgebildet sein. Es ist auch möglich, bei dem Antrieb 12 die Positionserfassungseinrichtung 32 weg zu lassen, wenn der Antrieb 12 das Drehklappenventil 3 lediglich öffnen und schließen, nicht aber in Zwischenstellungen überführen soll.

Die insoweit beschriebene Ventilbaueinheit 1 arbeitet wie folgt:
Im Ruhezustand sind beider Drehklappen 22, 23 geschlossen, d.h. quer zu der Durchströmungsrichtung 15 orientiert. Sie liegen an ihrem gesamten Umfang abdichtend an der jeweiligen Auskleidung 24, 25 an.

Wenn die Ventilbaueinheit 1 nun einen Gasfluss zulassen soll, werden beide Drehklappenventile 2, 3 geöffnet. Dies kann gleichzeitig oder vorzugsweise auch seriell, d.h. nacheinander geschehen. Letzteres hat den Vorzug der geringeren Belastung entsprechender Versorgungsnetze, wie beispielsweise eines Druckluftnetzes. Beispielsweise wird zunächst das Drehklappenventil 3 ganz geöffnet, um die Drehklappe 23 parallel zu der Durchströmungsrichtung 15 auszurichten. Dann wird der Antrieb 11 aktiviert, um die Drehklappe 22 in die gewünschte Drehposition zu bringen. Dies kann, wenn mit der Ventilbaueinheit ein Brenner gesteuert werden soll, zunächst eine Drosselstellung sein, in der lediglich eine geringe Start- oder Zündgasmenge freigegeben wird. Hat der Brenner gezündet und werden größere Gasströme gefordert, kann der Antrieb 11 die Drehklappe 22 in jede gewünschte Position bringen, um den jeweils gewünschten Gasstrom freizugeben.

Soll der Gasstrom wieder abgeschaltet werden, können beide Drehklappenventile 2, 3 zugleich oder nacheinander geschlossen werden.

Es ist möglich, an der Ventilbaueinheit 1 einen Druckspeicher vorzusehen, um das Schließen der Drehklappenventile 2, 3 in jedem Fall und zwar auch bei Ausfall eines versorgenden Druckluftnetzes bewirken zu können. Ein solcher Druckspeicher ein Speichervolumen haben, das zum ein- oder mehrmaligen Betätigen der Antriebe 11, 12 ausreicht. Der Druckspeicher kann körperlich unmittelbar mit dem Verbindungsstück 4 verbunden, beispielsweise verschweißt sein.

Es ist auch möglich, die Sicherheitsschließfunktion durch Federn zu erbringen. Beispielsweise können die Wellen 13, 14 mit Drehfedern verbunden sein (z.B. Spiralfedern), die die Wellen 13, 14 in Schließstellung vorspannen.

Es ist auch möglich, in den Pneumatikzylinder 28 eine Druckfeder oder Zugfeder oder ein sonstiges Federmittel einzubauen, das den Kolben in Schließrichtung vorspannt. Solche Federmittel können auch außerhalb des Pneumatikzylinders 28 angeordnet werden.

Alternative Antriebskonzepte sind möglich. Beispielsweise können als Antriebe 11, 12 Kolbenstangen lose Pneumatikzylinder Anwendung finden. Es ist auch möglich, die Drehklappenventile 2, 3 durch hydraulische oder pneumatische Schenkantriebe anzutreiben, die unmittelbar eine Schwenkbewegung, d.h. eine Drehbewegung mit begrenztem Winkelbereich erzeugen. Es können auch Servomotorantriebe Anwendung finden, wie Figur 4 zeigt. Der dort beispielhaft schematisch skizzierte Antrieb umfasst einen Servomotor 35, dessen Drehbewegung durch ein Spindelhubgetriebe 36 in eine Linearbewegung umgesetzt wird. Diese Linearbewegung kann durch ein geeignetes Umsetzgetriebe 37 in eine Schwenkbewegung verwandelt werden. Das Umsetzgetriebe 37 kann, wie veranschaulicht, durch eine Zahnstange 38 und ein Zahnrad 39 oder Zahnradsegment gebildet werden. Alternativ kann das Umsetzgetriebe 37 auch, wie Figur 3 veranschaulicht, durch ein Pleuel 30 und einen Kurbelarm 31 gebildet werden.

Ein Federmittel 40, beispielsweise in Form einer Druck- oder Zugfeder, kann dazu vorgesehen werden, die Zahnstange 38 in Schließrichtungen des zu betätigenden Ventils vorzuspannen.

Bevorzugterweise ist an geeigneter Stelle des Kraftübertragungswegs zwischen dem Servomotor 35 und der Welle 13 eine Kupplung 41 angeordnet, die eine Kraftübertragung nur dann vornimmt, wenn das Antriebsmedium des Antriebs im Falle des Servomotors 35 Elektroenergie, vorhanden ist. Die Kupplung kann z.B. zwischen dem Spindelhubgetriebe 36 und der Zahnstange 38 angeordnet sein und bei Stromausfall lösen, so dass die Feder 40 das angeschlossenen Drehklappenventil 2 ungeachtet der Drehposition des Servomotors 35 schließt.

Die Steuereinrichtung 10 kann über die Steuerung der Antriebe 11, 12 hinaus weitere Funktionen übernehmen und somit beispielsweise als Dichtprüfeinrichtung dienen. Dies ist in Figur 5 am Beispiel einer ventilgesteuerten Druckprüfeinrichtung veranschaulicht. Der in dem Verbindungsstück 4 herrschende Druck wird mittels zumindest eines vorzugsweise aber mittels zweier Drucksensoren 42, 43 beispielsweise in Form von Druckwächtern überwacht. Diese geben bei Über- oder Unterschreiten eines bestimmten Drucks ein Signal an die Steuereinrichtung 10 ab. Es können jedoch auch analog oder digital messende Sensoren Anwendung finden, die ein druckäquivalentes Ausgangssignal erzeugen.

Ein erstes Ventil 44 dient dazu, unter der Regie der Steuereinrichtung 10 eine stromaufwärtige Gasleitung mit dem Innenraum des Verbindungsstücks 4 zu verbinden. Ein zweites von der Steuereinrichtung 10 gesteuertes Ventil 45 verbindet, wenn es geöffnet wird, den Innenraum des Verbindungsstücks 4 mit einer zu dem Drehklappenventil 3 stromabwärtigen Leitung.

Die Steuereinrichtung 10 kann nun eine Druckprüfung vornehmen, indem sie bei geschlossenen Drehklappenventilen 2, 3 sowie geschlossenem Ventil 44 zunächst das Ventil 45 kurz öffnet und wieder schließt, um dann zu erfassen, ob der Druck in dem Verbindungsstück 4 ansteigt und wenn ja in welcher Zeit eine Schaltschwelle des Druckwächters 42 oder 43 erreicht oder überschritten wird. Damit wird die Dichtigkeit des Drehklappenventils 2 getestet.

Zur Überprüfung der Dichtigkeit des Drehklappenventils 3 wird bei geschlossenen Drehklappenventilen 2, 3 und geschlossenem Ventil 45 kurzzeitig das Ventil 44 geöffnet und wieder geschlossen. In dem Innenraum des Verbindungsstücks 4 ist nun Eingangsdruck vorhanden, der, wenn das Drehklappenventil 3 nicht ausreichend dicht ist, allmählich wieder abfällt. Die Steuereinrichtung 10 überwacht nun anhand der von den Druckwächtern 42, 43 gelieferten Signale, ob und wenn ja in welcher Zeit, der Druck abfällt.

Alternativ kann zu der Steuereinrichtung 10 eine Pumpe 46 gehören, die den Innenraum des Verbindungsstücks 4 gezielt unter Druck setzt, wobei der zeitliche Verlauf des Drucks durch einen Drucksensor 47 überwacht wird. Der Vorteil dieser Ausführungsform liegt darin, dass mit erhöhten Prüfdrücken gearbeitet werden kann.

Eine erfindungsgemäße Ventilbaueinheit umfasst zwei Drehklappenventile 2, 3 durch ein Verbindungsstück 4 miteinander verbunden sind sowie eine zugeordnete Antriebseinrichtung 9. Die Drehklappenventile 2, 3 bilden mit dem Verbindungsstück 4 eine Baueinheit, deren äußere Abmessungen mit einem Standardventil übereinstimmt.

### Bezugszeichen

- 1: Ventilbaueinheit
- 2, 3: Drehklappenventile
- 4: Verbindungsstück
- 5, 6: Gehäuse
- 7, 8: Scheibenflansch
- 9: Antriebseinrichtung
- 10: Steuereinrichtung
- 11, 12: Antriebe
- 13, 14: Wellen
- 15: Durchgangsrichtung
- 16, 17: Drehachsen
- 18 - 21: Stirnseiten der Gehäuse 5, 6
- 22, 23: Drehklappe
- 24, 25: Auskleidung
- 26: Filter
- 27: Strömungsleiteinrichtung
- 28: Pneumatikzylinder
- 29: Kolbenstange
- 30: Pleuel
- 31: Kurbelarm
- 32: Positionserfassungseinrichtung
- 33, 34: Pneumatikleitungen
- 35: Servomotor
- 36: Linearbewegung
- 37: Umsetzgetriebe
- 38: Zahnstange
- 39: Zahnrad
- 40: Feder
- 41: Kupplung
- 42, 43: Sensoren
- 44, 45: Ventil
- 46: Pumpe
- 47: Sensor

## Patentansprüche

1. Ventilbaueinheit (1) zum Absperren, Freigeben und Regulieren eines Fluidstroms,
mit zwei in einem Abstand (12) zueinander angeordneten Drehklappenventilen (2, 3), die jeweils ein ringförmiges Gehäuse (5, 6) und eine Stellklappe (22, 23) aufweisen, die jeweils um eine Drehachse (16, 17) drehbar gelagert sind, die quer zu einer Längsrichtung (15) orientiert sind,
mit einem Verbindungsstück (4), über das die beiden Gehäuse (5, 6) miteinander verbunden sind, so dass ein Durchgangskanal definiert ist, an dessen einen Ende eines der Drehklappenventile (2, 3) und an dessen anderen Ende das andere der Drehklappenventile (2, 3) angeordnet ist,
mit einer Antriebseinrichtung (9) zur gezielten Verstellung der Stellklappen (22, 23) der beiden Drehklappenventile (2, 3),
wobei die beiden Gehäuse (5, 6) jeweils zwei voneinander weg weisende Anschlussflächen (18, 20; 19, 21) aufweisen, deren Abstand voneinander eine Gehäuselänge (11) festlegt und wobei das Verbindungsstück (4) eine Länge (12) aufweist, die mindestens so groß ist wie die Gehäuselänge (11) und höchstens das 3-fache der Gehäuselänge (11) beträgt,
**dadurch gekennzeichnet,**
**dass** die Antriebseinrichtung (9) Selbstschlusscharakteristik aufweist und
**dass** die Antriebseinrichtung (9) mindestens einen Federspeicher (40) zum selbsttätigen Schließen mindestens eines Drehklappenventils (2, 3) bei Ausfall des Betriebsmediums der Antriebseinrichtung (9) aufweist.

2. Ventilbaueinheit nach Anspruch 1, **dadurch gekennzeichnet, dass** jedes Drehklappenventil (2, 3) in dem ringförmigen Gehäuse (5, 6) einen Durchgang aufweist, der mit einer Elastomer-Dichtung (24, 25) ausgekleidet ist.

3. Ventilbaueinheit nach Anspruch 1, **dadurch gekennzeichnet, dass** die Drehklappenventile (2, 3) und das Verbindungsstück (4) koaxial zueinander angeordnet sind.

4. Ventilbaueinheit nach Anspruch 1, **dadurch gekennzeichnet, dass** die Drehklappenventile (2, 3) und das Verbindungsstück (4) den gleichen Querschnitt aufweisen.

5. Ventilbaueinheit nach Anspruch 1, **dadurch gekennzeichnet, dass** die Antriebseinrichtung (9) mindestens eine bei Ausfall des Betriebsmediums selbstlösende Kupplung (41) angeordnet enthält.

6. Ventilbaueinheit nach Anspruch 1, **dadurch gekennzeichnet, dass** eine Dichtprüfeinrichtung vorgesehen ist, zu der mindestens ein an das Verbindungsstück (4) angeschlossener Drucksensor (42) gehört.

7. Ventilbaueinheit nach Anspruch 6, **dadurch gekennzeichnet, dass** die Dichtprüfeinrichtung eine Pumpe (46) zur gezielten Druckbeaufschlagung des von dem Verbindungsstück (4) umschlossenen Innenraums aufweist.

8. Ventilbaueinheit nach Anspruch 6, **dadurch gekennzeichnet, dass** zu der Dichtprüfeinrichtung zwei Ventile (44, 45) zur gezielten Druckbeaufschlagung und Druckentlastung des von dem Verbindungsstück (4) umschlossenen Innenraums gehören.

9. Ventilbaueinheit nach Anspruch 1, **dadurch gekennzeichnet, dass** in dem Verbindungsstück (4) eine Strömungsleiteinrichtung (27) vorgesehen ist.

10. Ventilbaueinheit nach Anspruch 1, **dadurch gekennzeichnet, dass** in dem Verbindungsstück (4) eine Strömungsberuhigungseinrichtung (27) vorgesehen ist.

11. Ventilbaueinheit nach Anspruch 1, **dadurch gekennzeichnet, dass** in dem Verbindungsstück (4) ein Filter (26) angeordnet ist.

12. Ventilbaueinheit nach Anspruch 1, **dadurch gekennzeichnet, dass** in dem Verbindungsstück (4) ein Linearisierungselement (26a) angeordnet ist.

13. Ventilbaueinheit nach Anspruch 12, **dadurch gekennzeichnet, dass** das Linearisierungselement (26a) an verschiedenen Stellen seiner Durchtrittsfläche unterschiedliche Strömungswiderstände aufweist, um unterschiedliche Strömungswiderstände der Durchtrittsfläche des vorgelagerten Drehklappenventils (2) zu kompensieren.

## Claims

1. Valve component (1) for shutting off, releasing and controlling a fluid flow,
with two rotating flap valves (2, 3), which are arranged at a distance (12) from one another and respectively have a ring-shaped housing (5, 6) and a regulating flap (22, 23), which are respectively mounted to be rotatable around a rotational axis (16, 17) oriented transversely to a longitudinal direction (15),
with a connection piece (4), by means of which the two housings (5, 6) are connected to one another, so that a through channel is defined having one of the rotating flap valves (2, 3) arranged at its one end and the other rotating flap valve (2, 3) arranged at the other,
with a drive means (9) for targeted adjustment of the regulating flaps (22, 23) of the two rotating flap valves (2, 3),
wherein the two housings (5, 6) respectively have two connection faces (18, 20; 19, 21) pointing away from one another, the spacing of which defines a housing length (11), and wherein the connection piece (4) has a length (12), which is at least as large as the housing length (11) and at most amounts to 3-times the housing length (11),
**characterised in that**
the drive means (9) has self-closing characteristics and
that the drive means (9) has at least one spring-loaded mechanism (40) for automatic closure of at least one rotating flap valve (2, 3) in the event of failure of the operating medium of the drive means (9).

2. Valve component according to claim 1, **characterised in that** each rotating flap valve (2, 3) has a passage lined with an elastomer seal (24, 25) in the ring-shaped housing (5, 6).

3. Valve component according to claim 1, **characterised in that** the rotating flap valves (2, 3) and the connection piece (4) are arranged coaxially to one another.

4. Valve component according to claim 1, **characterised in that** the rotating flap valves (2, 3) and the connection piece (4) have the same cross-section.

5. Valve component according to claim 1, **characterised in that** the drive means (9) contains at least one coupling (41) arranged therein that is self-releasing in the event of failure of the operating medium.

6. Valve component according to claim 1, **characterised in that** a seal testing device is provided, which includes at least one pressure sensor (42) connected to the connection piece (4).

7. Valve component according to claim 6, **characterised in that** the seal testing device has a pump (46) for the targeted application of pressure to the interior enclosed by the connection piece (4).

8. Valve component according to claim 6, **characterised in that** the seal testing device includes two valves (44, 45) for the targeted application and release of pressure of the interior enclosed by the connection piece (4).

9. Valve component according to claim 1, **characterised in that** a flow guide means (27) is provided in the connection piece (4).

10. Valve component according to claim 1, **characterised in that** a flow calming means (27) is provided in the connection piece (4).

11. Valve component according to claim 1, **characterised in that** a filter (26) is arranged in the connection piece (4).

12. Valve component according to claim 1, **characterised in that** a linearising element (26a) is arranged in the connection piece (4).

13. Valve component according to claim 12, **characterised in that** the linearising element (26a) has different flow resistances at different points of its passage surface in order to compensate different flow resistances of the passage surface of the rotating flap valve (2) disposed upstream.

## Revendications

1. Module de vanne (1) pour arrêter, libérer et réguler un écoulement de fluide, comprenant deux vannes à clapet rotatif (2, 3) disposées à une distance (12) l'une de l'autre, qui comportent chacune un boîtier annulaire (5, 6) et un clapet de réglage (22, 23) monté à rotation autour d'un axe de rotation respectif (16, 17) orienté transversalement à une direction longitudinale (15), comprenant une pièce de liaison (4) par laquelle les deux boîtiers (5, 6) sont reliées ensemble de manière à définir un canal de passage à une extrémité duquel est disposée une des vannes à clapet rotatif (2, 3) et à l'autre extrémité duquel l'autre vanne à clapet rotatif (2, 3), comprenant un dispositif d'entraînement (9) pour le réglage sélectif des clapets de réglage (22, 23) des deux vannes à clapet rotatif (2, 3), les deux boîtiers (5, 6) présentant chacun deux surfaces de raccordement (18, 20 ; 19, 21) orientées à l'opposé l'une de l'autre, dont la distance mutuelle définit une longueur de boîtier (11), et la pièce de liaison (4) présentant une longueur (12) qui est au moins aussi grande que la longueur de boîtier (11) et correspond au maximum au triple de la longueur de boîtier (11), **caractérisé en ce que** le dispositif d'entraînement (9) possède une caractéristique de fermeture automatique et **en ce que** le dispositif d'entraînement (9) comporte au moins un accumulateur à ressort (40) pour la fermeture automatique d'au moins une vanne à clapet rotatif (2, 3) en cas d'absence du fluide de travail du dispositif d'entraînement (9).

2. Module de vanne selon la revendication 1, **caractérisé en ce que** chaque vanne à clapet rotatif (2, 3) présente dans le boîtier annulaire (5, 6) un passage qui est garni d'un joint élastomère (24, 25).

3. Module de vanne selon la revendication 1, **caractérisé en ce que** les vannes à clapet rotatif (2, 3) et la pièce de liaison (4) sont disposées coaxialement l'une à l'autre.

4. Module de vanne selon la revendication 1, **caractérisé en ce que** les vannes à clapet rotatif (2, 3) et la pièce de liaison (4) présentent la même section.

5. Module de vanne selon la revendication 1, **caractérisé en ce que** le dispositif d'entraînement (9) contient au moins un accouplement autolibérable (41) en cas d'absence du fluide de travail.

6. Module de vanne selon la revendication 1, **caractérisé en ce qu'**il est prévu un dispositif de contrôle d'étanchéité dont fait partie au moins un capteur de pression (42) raccordé à la pièce de liaison (4).

7. Module de vanne selon la revendication 6, **caractérisé en ce que** le dispositif de contrôle d'étanchéité comporte une pompe (46) pour la mise sous pression sélective de l'espace intérieur délimité par la pièce de liaison (4).

8. Module de vanne selon la revendication 6, **caractérisé en ce que** le dispositif de contrôle d'étanchéité comprend deux vannes (44, 45) pour la mise sous pression sélective et la détente de l'espace intérieur délimité par la pièce de liaison (4) .

9. Module de vanne selon la revendication 1, **caractérisé en ce qu'**un dispositif de guidage d'écoulement (27) est prévu dans la pièce de liaison (4).

10. Module de vanne selon la revendication 1, **caractérisé en ce qu'**un dispositif de stabilisation d'écoulement (27) est prévu dans la pièce de liaison (4).

11. Module de vanne selon la revendication 1, **caractérisé en ce qu'**un filtre (26) est disposé dans la pièce de liaison (4).

12. Module de vanne selon la revendication 1, **caractérisé en ce qu'**un élément de linéarisation (26a) est disposé dans la pièce de liaison (4).

13. Module de vanne selon la revendication 12., **caractérisé en ce que** l'élément de linéarisation (26a) présente des résistances à l'écoulement différentes en divers points de sa surface de passage pour compenser des résistances à l'écoulement différentes de la surface de passage de la vanne à clapet rotatif (2)
